# EUROPEAN PATENT APPLICATION

(11) **EP 4 310 964 A1**
(43) Date of publication of application: **24.01.2024**
(21) Application number: 22186196.6
(22) Date of filing: 21.07.2022
(51) Int. Cl.: H01M 8/0273, H01M 8/0286, H01M 8/10

(54) **METHOD OF FIXING A MEMBRANE TO A FRAME, CELL STACK AND USE**

(71) Applicant: MANN+HUMMEL LIFE SCIENCES & ENVIRONMENT HOLDING SINGAPORE PTE. LTD., Singapore 139234 (SG)
(72) Inventor: FASOLD, Michael, 71549 Auenwald (DE)
(74) Representative: Mann + Hummel Intellectual Property

(57) **Abstract**

The present invention provides a method of fixing a separator membrane to a first frame member of a battery cell stack. The method comprises: creating a fixation area comprising a first zone and a second zone, wherein creating the first zone comprises securing the separator membrane to the first frame member, and wherein creating the second zone comprises mechanically compressing the separator membrane with a projection of a frame member or with a sealing part. There is also provided a cell stack and a use of an ion-exchange membrane in the disclosed cell stack.

## Description

### Technical Field

The present application relates to a method of fixing a membrane, particularly a separator membrane or an ion-exchange membrane, to a frame, a cell stack and a use of an ion-exchange membrane in the cell stack.

### Background Art

Membranes may be secured in a frame so that the center of the membrane is exposed to allow the membrane to perform its function, such as the exchange of molecules, ions, or other particles. The frame may be used to improve handleability of the membrane or to facilitate assembly of the membrane into a system. Where the membrane is used in a battery cell, fuel cell or similar, such as an electrodialysis cell or a PEM electrolyzer, the frame may provide the required isolation to prevent short-circuits.

Typical methods to secure the membrane to the frame include welding, adhesive bonding, mechanical forces, such as clamping, or any other method of connection. For certain applications, it is essential for the membrane to be durably secured to the frame to prevent mixing of substances between both sides of the membrane. For example, in battery cells, mixing of electrolyte between both sides of the membrane leads to discharge and/or short circuiting. In another example, mixing of filtered and unfiltered liquids between both sides of the membrane leads to contamination of the desired result, e.g., the filtered liquids.

Welding processes use heat and pressure to permanently join two objects together. However, the welding process becomes complex, sometimes unfeasible, if the welding properties of the two objects are so far apart, which prevents the application of heat and pressure to provide a suitable joint. In such scenarios, the materials of the two objects would need to be re-designed or an alternative connection, such as adhesive bonding, is used to facilitate the securing of such objects together. Even if the two objects are suitable to be welded together, the joint may weaken over time due to forces that may act on each object in its immediate and/or operating environment, creating undesirable shear forces between the objects. Additionally, the adhesives selected for adhesive connection would need to withstand the immediate and/or operating environment of the secured objects for a reasonable period of time. Invariably, adhesive bonds of the adhesives may be lost over time due to reaction with components in the environment or the physical state of the adhesives may change. For example, the adhesives may harden and peel off over time.

There is therefore a need to provide a durable and sufficiently tight connection between a membrane and a frame that overcomes, or at least ameliorates, the problem(s) described above and other disadvantages.

### Summary

In an aspect, there is provided a method of fixing a separator membrane to a first frame member of a cell stack. The method comprises creating a fixation area comprising a first zone and a second zone. Creating the first zone comprises securing the separator membrane to the first frame member. Creating the second zone comprises mechanically compressing the separator membrane with a projection of a frame member or with a sealing part.

A separator membrane is a core component of a battery cell, fuel cell or similar. Main tasks of the membrane are the separation of the positively and negatively charged electrolytes or electrodes and the selective conduction of ionic charge carriers through the membrane, which is necessary for the conduction of electrons via the external circuit, therefore termed as "ion-exchange membrane". Another task of the membrane, such as of a fuel cell, is for humidification, since electric currents produced by an electrochemical reaction in the fuel cell utilizes moisture-enriched supplied air. Such membrane is a gas-to-gas membrane permeable to water vapor but not to other gaseous components in air. The term "membrane", or "separator membrane" as used interchangeably herein, also encompasses such gas-to-gas membranes. In addition to good electrochemical properties, such as high ionic conductivity and low electrical resistance, the membrane should have excellent mechanical and chemical stability, as well as low water absorption and swelling behaviour. Furthermore, the membrane should have good processing properties, such as handling and connectivity with other materials by welding or bonding. Finally, the battery or fuel cell with the membrane should show a high cycle stability, high energy efficiency, and high Coulomb efficiency of the whole system. As can be seen, the material of the membrane and its system has many requirements. Hence, the present disclosure provides a solution that balances the requirements on the membrane with secure fixation of the membrane to the frame of the cell stack.

A cell stack is the eventual system that the fixed separator membrane is assembled into. The fixed membrane and frame members may be stacked with other layers in the eventual system to form an operational cell stack, such as an operational battery cell stack, fuel cell stack, electrolyzer cell stack, electrodialysis cell stack or similar.

The step of creating the fixation area may comprise creating the first zone and creating the second zone.

Creating the first zone comprises securing the separator membrane to the first frame member. The first zone advantageously provides the primary means of fixing the separator membrane to the frame. The step of securing may comprise undertaking any suitable means to secure or immobilize the separator membrane to the first frame member. In embodiments, the step of securing may comprise adhering the separator membrane to the first frame member. The step of securing may comprise using suitable means of adhesion to adhere the separator membrane to the first frame member. In other embodiments, the step of securing may comprise integrally bonding the separator membrane to the first frame member. By "integral bonding", it is meant that two discrete objects are joined as a single, unitary structure at their point(s) of connection. Integral bonding includes material bonding in which the materials of the two discrete objects fuse or coalesce at their point(s) of connection, for example, with the application of heat and/or pressure. An example of integral bonding includes welding. Integral bonding is contrasted with adhesive bonding, as adhesive bonding may involve an integral bond between the adhesive and the material(s) in contact with the adhesive, but not an integral bond between the materials of the two discrete objects. In yet other embodiments, the step of securing may comprise a combination of adhering and integrally bonding the separator membrane to the first frame member. In some embodiments, the separator membrane may be secured to a frame member, such as the first frame member, or between two frame members. In the event the primary means of fixation in the first zone fails, the second zone advantageously provides an additional point of fixation.

Creating the second zone comprises mechanically compressing the separator membrane with a projection of a frame member or with a sealing part. "Mechanical compression" refers to a form of securing that uses mechanical means, in contrast with adhesion or integral bonding which involve chemical bonds. Mechanical compression may involve provision of a mechanical force, such as by clamping, to cause immobility of the membrane between the frame members. Mechanical compression increases the friction between the contacting surfaces. Mechanical compression may not cause deformation of the separator membrane and/or any associated frame member, but in some embodiments, the mechanical forces used may be high enough to cause deformation. Deformation means that the membrane and/or any associated frame member are warped or misshapened, and may retain their deformed shape. The membrane and/or any associated frame member may be deformed to result in a three-dimensional shape, as opposed to its initial layered, linear form. Mechanical deformation may be analogous to embossing of the membrane. Mechanical deformation of the membrane and/or any associated frame member may result in the layers having a similar shape. Mechanically deformed layers may have geometries complementary to each other. The mechanically deformed layers may be form fit. A mechanically deformed membrane may be configured to engage frame member(s) in at least a form-fitting and/or force-fitting manner for fixation. The layers may be mechanically deformed in a form-fitting and/or force-fitting manner, for example by screwing, latching and/or clamping manner. The mechanically deformed layers may have complementary form-fitting contours, for example contours formed as a vertically extending form-fitting groove or a form-fitting projection.

The projection may be provided on the frame member in such a way that the separator membrane is not perforated during the step of mechanical compression. The sealing part may mechanically compress the separator membrane in such a way that the separator membrane is not perforated during the step of mechanical compression. Advantageously, the membrane is compressed but not destroyed in the second zone during the step of mechanical compression. Destruction of the membrane during the fixation may cause undesirable leakages due to the broken connection between the membrane and frame members. As mentioned above, an unsecure sealing of the membrane to its frame causes a system in which the membrane and frame are in, such as a battery cell stack, to be compromised.

The projection may be located on the first frame member, a second frame member, or a combination thereof.

The step of mechanical compression may comprise mechanically compressing the separator membrane with a projection provided on the first frame member. Where the first frame member comprises a projection adapted to mechanically compress the membrane, the second zone may be created contemporaneously with the first zone. In such embodiment, the second zone may be created by simple application of a mechanical force, for example by or during the integral bonding step or the adhering step which may also provide the pressure to mechanically compress the membrane in the second zone, or alternatively, separate to the integral bonding step or adhering step.

The step of mechanical compression may comprise mechanically compressing the separator membrane between the first frame member and a second frame member opposite the first frame member. That is, the first frame member is on one side of the membrane, while the second frame member is on the other side of the membrane. In such embodiment, the projection is provided on the second frame member and/or the opposing first frame member. In such embodiments, the separator membrane may be secured between two frame members, i.e., the first and second frame members, in the first zone. Where a second frame member comprises the projection adapted to mechanically compress the membrane, the second zone may be created separately, or not simultaneously, from the first zone. In such embodiment, the second zone may be created by simple application of a mechanical force, for example when the membrane fixed between the first and second frame members are provided in its eventual system, such as a battery cell stack. Assembling the eventual system may comprise fastening various components of the system together, including the membrane fixed between the first and second frame members, thereby providing a mechanical force to create the mechanical compression in the second zone.

Creating the second zone may comprise mechanically compressing the separator membrane with a projection of a frame member, whether a first frame member or a second frame member on the opposite side of the separator membrane, so as to sandwich the separator membrane. The projection on the frame member may mechanically compress the membrane directly, without any intervening layers in between. Alternatively, the projection on the frame member may mechanically compress the membrane indirectly, through intervening layer(s). The frame member that the membrane is compressed against, i.e., opposite the frame member comprising the projection, may also be mechanically compressed. The intervening layer(s) may similarly be mechanically compressed or even deformed. The intervening layer may be a frame member as defined herein.

As the membrane may be mechanically compressed in the second zone, movement of the membrane may advantageously be restricted. Thus, the present disclosure advantageously provides an additional point of fixation of the membrane in the second zone, in the event that the first point of fixation in the first zone fails due to reasons mentioned above. Furthermore, the first point of fixation may be unduly loaded when the membrane reacts adversely to its immediate environment. For example, the fixed membrane may be stored before assembly into the eventual system. Variations in relative humidity in the storage environment of the fixed membrane may cause the membrane to shrink. In another example, electrolyte in the operating environment of the membrane may cause the membrane to swell. Pressure differences between the chamber above the membrane and the chamber below the membrane may also cause mechanical load on the points of fixation. Advantageously, the immobilization of the membrane in the second zone due to the mechanical compression prevents or reduces the mechanical load acting on the first point of fixation due to movement of the membrane. A combination of the mechanical compression in the second zone and the securing in the first zone may also advantageously spread the mechanical load acting on the points of fixation and reduce the risk for leakage during operation. Where the securing step is a welding process, the mechanical compression in the second zone may advantageously relieve the membrane that may be weakened or even perforated during the welding process.

The second zone may be created by simple application of a mechanical force. Simple application of pressure or a mechanical force means that specialized equipment providing excessive pressure or force is not required. Simple application of pressure or force may be done manually or by tools to assist in the application, such as fastening tools. Assembling the eventual system may comprise fastening various components of the system together, including the membrane fixed to the first frame member, thereby providing a mechanical force to create the mechanical compression in the second zone.

The fixation area may comprise a third zone. Creating the fixation area may further comprise creating the third zone. The third zone may be between the first zone and the second zone. The method may further comprise creating the third zone by mechanically compressing the membrane with a sealing part. The sealing part in the third zone may be different from the sealing part in the second zone. The third zone may advantageously provide yet another point of fixation.

In another aspect, there is provided a cell stack comprising at least one of: a separator membrane fixed to a first frame member, and a pair of electrode assemblies, the separator membrane fixed to the first frame member being provided between the pair of electrode assemblies. The fixation area comprises a first zone and a second zone. The first zone comprises the separator membrane secured to the first frame member, and the second zone comprises the separator membrane mechanically compressed by a projection of a frame member or by a sealing part. The cell stack further comprises an electrically-isolated end plate in an adjacent layer to each outermost electrode assembly, wherein the layers of the cell stack are fastened together.

The separator membrane may be fixed to the first frame member according to the disclosed method.

For ease of reference, a separator membrane, such as an ion-exchange membrane, fixed to a first frame member, and optionally between the first frame member and a second frame member, is termed herein as a "membrane sandwich". The membrane sandwich provided between the pair of electrode assemblies is termed herein as a "cell". A cell configured for use in a battery or redox flow battery is a battery cell. A cell configured for use in hydrogen generation is an electrolyzer cell. A cell configured for use in water deionization is an electrodialysis cell. The disclosed cell stack may be configured for use in a redox flow battery, an electrolyzer or an electrodialysis cell.

The disclosed cell stack comprises at least one cell. The number of cells in the cell stack depends on the output required. For a battery cell stack, the number of cells in the battery cell stack depends on the energy output needed. Where there is more than one cell, the separator membrane of a cell which is fixed to only a first frame member may be sandwiched between the first frame member and a first frame member of the adjacent cell. Where there is more than one cell, an electrode assembly of a pair of electrode assemblies may be shared with the adjacent cell.

The cell stack further comprises an electrically-isolated end plate in an adjacent layer to each outermost electrode assembly. Thus, the at least one cell is provided between a pair of electrically-isolated end plates.

The layers of the cell stack are fastened together. The at least one cell and the pair of electrically-isolated end plates are fastened together to result in the cell stack. Fastening of the layers of the cell stack may be performed with simple application of pressure or a mechanical force to provide adequate sealing or securing of the components of the battery cell stack.

In yet another aspect, there is provided the use of an ion-exchange membrane in the disclosed cell stack.

### Brief Description of Drawings

Fig. 1a shows an illustration of a section view along line AA' (shown in Fig. 1b) of a separator membrane 104 fixed between a first frame member 102 and a second frame member 106, with the second frame member 106 comprising a projection 110' configured to mechanically compress the membrane 104, according to an embodiment of the present disclosure.
Fig. 1b shows an illustration of a top view of the membrane 104 fixed between the first frame member 102 and the second frame member 106, the membrane 104 and the first frame member 102 being obscured by the second frame member 106, according to the embodiment of Fig. 1a.
Fig. 2a shows an illustration of a section view along line AA' of membrane 104 fixed between first frame member 102 and second frame member 106 according to another embodiment of the present disclosure, wherein a third frame member 110 comprises a projection 110' configured to mechanically compress the membrane 104 indirectly through frame member 106.
Fig. 2b shows an illustration of a mechanically deformed membrane 104 and associated frame members 106 and 102, upon application of a mechanical force, due to the projection 110' of frame member 110, according to the embodiment of Fig. 2a.
Figs. 3a to 3c show illustrations of a frame member having a projection, such as projection 110' of frame member 110, according to embodiments of the present disclosure.
Fig. 4a shows an illustration of a section view of a membrane 104 fixed between frame members 102 and 106 according to another embodiment of the present disclosure, wherein fixation area 108 comprises first zone 108a, second 108b and third zone 108c.
Fig. 4b shows an illustration of an alternative gasket that provides mechanical compression in the third zone 108c according to the embodiment of Fig. 4a.
Fig. 4c shows an illustration of another embodiment of the third zone 108c of Fig. 4a.
Fig. 5 shows an illustration of a section view of a battery cell stack 300 according to an embodiment of the present disclosure.

In the figures, like numerals denote like parts.

### Detailed Description

Hereinafter, exemplary embodiments of the present invention will be described in detail with reference to the accompanying drawings. The detailed description of this invention will be provided for the purpose of explaining the principles of the invention and its practical application, thereby enabling a person skilled in the art to understand the invention for various exemplary embodiments and with various modifications as are suited to the particular use contemplated. The detailed description is not intended to be exhaustive or to limit the invention to the precise embodiments disclosed. Modifications and equivalents will be apparent to practitioners skilled in this art and are encompassed within the spirit and scope of the appended claims.

There is provided a method of fixing a separator membrane to a first frame member of a cell stack.

A "frame" refers to a structure that holds or surrounds the membrane disclosed herein circumferentially. A frame member is a part of the frame that cooperates with other frame member(s) to hold or surround the membrane circumferentially. For example, a frame member may be a cross-sectional half of the frame, while another frame member is the other cross-sectional half of the frame, wherein the two cross-sectional halves sandwich the membrane. A frame may comprise different parts performing different functions to hold or surround the membrane circumferentially. The frame may comprise frame part(s) that form the structure of the frame, i.e., a structural frame part. The structural frame part may have a certain hardness conferring structure to the frame or the eventual system. The frame part may also be embodied as a film or foil that has relatively minimal thickness, so that stacked units of a plurality of membrane sandwiches may be assembled with minimal spacing relative to each other. Having a frame member being a thinner, optionally non-structural, frame part allows for filling of any spaces between structural frame members. Filled spaces advantageously prevents or reduces leakage of electrolyte through the spaces into the environment. Filled spaces further advantageously prevents or reduces stress on the layers, such as the membrane, which may arise due to pressure from assembly and/or operation. The frame may comprise sealing part(s) that enhance the holding of the membrane to the structure of the frame. The sealing part may also allow for filling of any spaces between frame parts or frame members. The sealing part may be a sealing material, such as glues, gaskets or other sealing material disclosed herein, possibly embodied as a film or foil of sealing material, or a filler material, such as foam, felt or other woven or non-woven materials. The frame may comprise a part of the system that the membrane sandwich is in, such as an electrode assembly if the system is a battery cell stack.

The first frame member and the second frame member, if present, may each be selected from: a frame part forming the structure of the frame, a sealing part, a film, or an electrode assembly. In an embodiment, the first frame member is a frame part and the second frame member is a frame part.

The frame or frame member may be made of synthetic or natural polymeric material such as plastic or rubber, or other electrically non-conducting materials. Where the membrane sandwich is used in a battery cell, fuel cell or similar, the frame may provide the required isolation to prevent short-circuits. The frame or frame member may be made of thermoplastic polymer(s). Non-limiting examples of thermoplastic materials include nylon, polyethylene, polypropylene, polyester, polyamine, poly(ether ether ketone) (PEEK), or combinations thereof. In an embodiment, the frame member is made of polypropylene. In an embodiment, both the first and second frame members are made of polypropylene.

The membrane may be made of polymeric material or a blend of polymers or monomers; ceramic composite material; metals or metal alloys; or a combination thereof. As an example, the membrane comprises a polymeric material, in which poly(ether ether ketone) (PEEK) is present as part of or a substituent of the polymer backbone. As another example, the membrane comprises a polymeric material, in which polytetrafluoroethylene (PTFE) is present as part of or a substituent of the polymer backbone. The separator membrane may be or may be used as an ion-exchange membrane. Where the membrane is an ion-exchange membrane, the membrane may comprise a polymer blend exhibiting acidic groups as well as basic groups. The membrane may comprise a polymer blend exhibiting acidic groups as well as basic groups, wherein PEEK is present as part of or a substituent of the polymer backbone of the polymer blend.

The membrane may be of a single layer configuration or of a multi-layer configuration. In case of a multi-layer configuration, there are, for example, three membranes that are immediately resting on each other of which the central membrane is a functional membrane, or the membrane providing the main function of the exchange of molecules, ions, or other particles, and the outer ones each form a cover or support membrane.

The method comprises creating a fixation area comprising a first zone and a second zone. The first zone comprises the separator membrane secured to the first frame member. The separator membrane may be secured to the first frame member and also a second frame member, depending on the requirements of the eventual cell stack. The separator membrane may be secured between the first frame member and the second frame member. In embodiments, the second zone comprises the separator membrane mechanically compressed by a projection of a frame member, such as the second frame member.

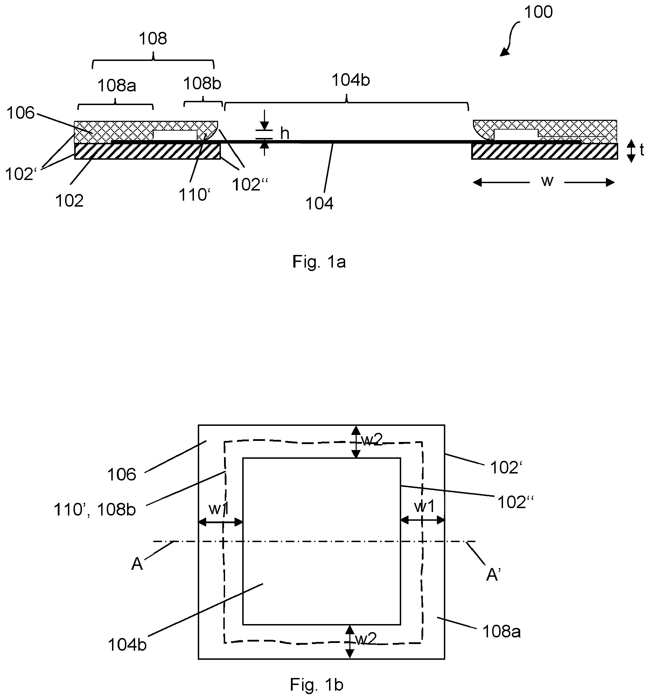

Fig. 1a shows an illustration of a section view along line AA' (shown in Fig. 1b) of a separator membrane 104 fixed between a first frame member 102 and a second frame member 106, according to an embodiment of the present disclosure. The second frame member 106 comprises a projection 110' configured to mechanically compress the membrane 104. Fig. 1b shows an illustration of a top view of the separator membrane 104 fixed between the first frame member 102 and the second frame member 106, the separator membrane 104 and the first frame member 102 being obscured by the second frame member 106, according to the embodiment of Fig. 1a. The membrane sandwich 100 therefore comprises separator membrane 104 fixed between first frame member 102 and second frame member 106. The membrane 104 and frame members 102, 106 are as disclosed herein. Fixation area 108 comprises a first zone 108a and a second zone 108b.

As can be seen in Figs. 1a and 1b, the frame members 102, 106, collectively termed the "frame", hold the membrane 104 around the circumference of the membrane 104. The frame allows the middle 104b of the membrane 104 to be exposed so that it can perform its function, such as the exchange of molecules, ions, or other particles. The functional surface area or active surface area (104b) of the membrane 104 is dependent on the requirements of the eventual system, such as the battery cell stack disclosed herein. Thus, the surface area of the membrane 104 sandwiched between frame members 102, 106 is also dependent thereon. It is to be noted that the figures are not drawn to scale.

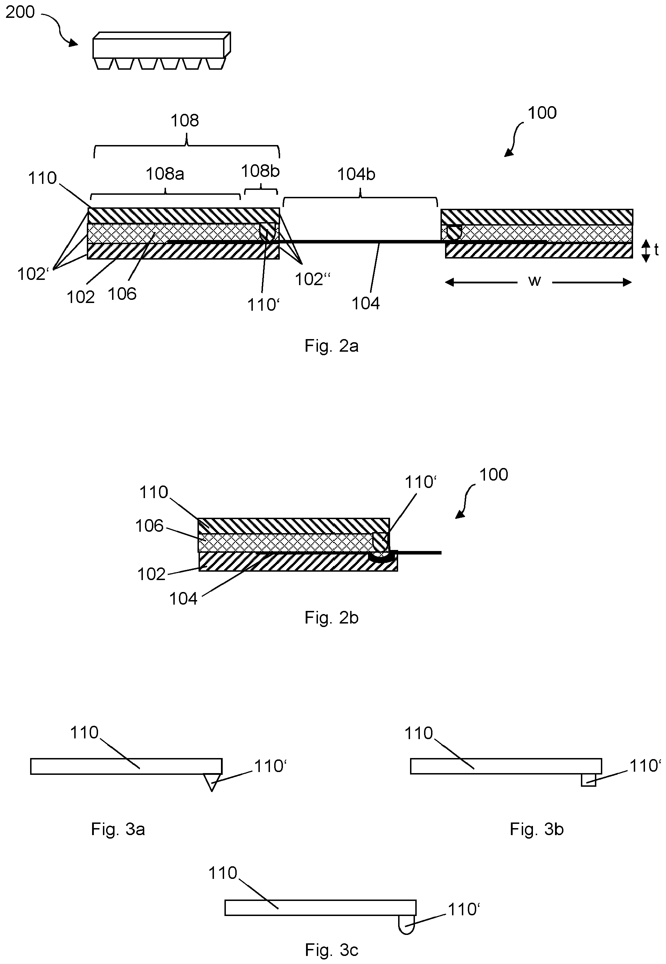

The surface area or width w of a side of the frame may be fully utilized as the fixation area 108, as shown in Fig. 1a. The first zone 108a may be proximate to a first edge 102' of the frame members 102, 106. The first edge 102' denotes an outer perimeter of the frame members. The first edges 102' of the frame members may or may not correspond to each other. The first edges 102' of the frame members, particularly the structural frame members, typically correspond to each other to thereby provide a uniform outline of a cell stack. The width w of the frame members may or may not correspond to each other. In Fig. 1a, the first edges 102' and the widths w of frame members 102, 106 are shown to correspond to each other. The widths w of frame members 102 and 106 correspond to each other to at least allow for projection 110' to sandwich membrane 104. The end of first zone 108a may be marked by where the means of securing ends, e.g., where the welding tool 200 as shown in Fig. 2a ends.

The width of the fixation area 108 of all sides of the frame may or may not correspond to each other. For example, in Fig. 1b, the width w1 of two opposing sides of the fixation area 108 may be the same as each other, but are different from the other two sides w2 of the fixation area.

The projection 110' is provided proximate the second edge 102" of the frame members opposite the first edge 102'. Therefore, the second zone 108b is proximate to the second edge 102" of the frame members opposite the first edge 102'. Providing the second zone 108b proximate the second edge 102" may advantageously spread the points of fixation across the width of the frame. The second edge 102" denotes an inner perimeter of the frame members. The second edges 102" of the frame members may or may not correspond to each other, as shown in Fig. 1a in contrast to Fig. 2a. The second edge 102" of the frame member extending the longest towards 104b defines the commencement of 104b, i.e., the commencement of the active surface area (104b) of the membrane 104.

In the embodiment of Fig. 1a, the second zone 108b comprises membrane 104 mechanically compressed by projection 110' of second frame member 106. The projection 110' on the second frame member 106 mechanically compresses the membrane directly, against opposite frame member 102. The projection 110' may mechanically compress the membrane without any intervening layers in between. The projection 110' may or may not mechanically deform the opposing frame member 102, depending on the hardness of the opposing frame member 102.

In embodiments not shown in the figures, the projection may be provided on first frame member 102. Providing a projection on frame member 102 may be useful when frame member 102 is a structural frame part or an electrode assembly. Having a projection on a structural frame part may provide the hardness required to compress the membrane. In such embodiments, the projection may be at a location outside the dimensions of the first zone 108a. Frame member 102 is brought together during the securing step and therefore the projection may be caused to mechanically compress the membrane in the second zone 108b contemporaneously with the creation of the first zone 108a.

In other embodiments not shown in the figures, the projection may be provided on more than one frame member. In such embodiments, the projections may be staggered so that the membrane is mechanically compressed but not perforated. In some embodiments, the frame member comprising the projection, such as the second frame member 106 in Fig. 1a or the third frame member 110 in Fig. 2a, may have one or a plurality of projections. The projection(s) may extend along the margin of the frame member or along the second edge 102". The projection(s) may be provided at regular intervals along the margin or second edge 102" of the frame member. The projection(s) may be provided at all sides of the membrane. Where the first zone created by a welding process is created at two sides of the membrane, or not all sides of the membrane, the remaining sides of the membrane may be fixed to the frame members by the projection(s) and/or by adhesion. The remaining sides of the membrane may be mechanically fixed, specifically mechanically compressed, by the projection(s) of the frame member.

The thickness t of a frame member depends on the selection or the type of frame member. For example, where frame member 102 is a structural frame part and frame member 106 is a film, the thickness t of frame member 102 may be thicker than that of frame member 106. As an example, the thickness t of a suitable film ranges from about 10 microns to about 1000 microns, or from about 50 microns to about 1000 microns, or from about 100 microns to about 1000 microns, or from about 10 microns to about 500 microns, or from about 10 microns to about 300 microns, or from about 10 microns to about 200 microns, or from about 100 microns to about 200 microns. In an example, the thickness t of a suitable film is about 150 microns. Where frame member 106 is a polypropylene film, the thickness t of such frame member 106 may similarly range from about 10 microns to about 1000 microns, for example, 150 microns. The thickness t of structural frame member 102 may range from about 0.2 mm to about 10 mm, for example about 1 to 2 mm.

The height h (shown in Fig. 1a) of the projection(s) 110' may be adapted so that mechanical compression of the membrane 104 can occur directly (Fig. 1a) or indirectly through any other layers (Fig. 2a), such as frame member 106, without perforating the membrane 104. The height h of the projection(s) 110' may correspond to or be matched to the thickness t of the membrane 104 and/or any associated frame member in second zone 108b. For example, the height h of the projection 110' where the projection 110' is provided on the first frame member 102 or the second frame member 106 may be smaller than that where the projection 110' is provided on the third frame member 110. In general, the layers of frame members as well as the projection(s) may be designed in the direction of zero gap.

The first zone 108a comprises the membrane 104 secured, e.g., adhered and/or integrally bonded, between the first frame member 102 and the second frame member 106. The means of adhesion may be applied on frame member 102, frame member 106 and/or one or both sides of membrane 104 in order to adhere membrane 104 between frame members 102 and 106. The means of adhesion may be applied in the first zone 108a. The means of adhesion may include a sealing material, an adhesive, a thermoplastic polymer or a thermosetting polymer. The means of adhesion may include but are not limited to epoxid based materials silcon based materials thermoplastic elastomers, fluor based materials, rubber based materials, or polyurethane based materials.

The means of integral bonding may comprise a welding process, such as an ultrasonic welding process, friction welding process, resistance welding process, or any other suitable types of welding processes. The welding process may comprise contacting a welding tool on the first zone 108a. Where the welding process is an ultrasonic welding process, the welding tool may be a sonotrode. The contact surface of the welding tool may have dimensions corresponding to or complementary to the first zone 108a, in order to create the first zone 108a. The step of contacting the welding tool on the first zone 108a may be performed under a set of conditions. The set of conditions may include a pressure setting or a sequence of a ramp-up and/or ramp-down of the pressure setting, duration of the pressure setting or pressure ramp, a force setting or a sequence of a ramp-up and/or ramp-down of the force setting, duration of the force setting or force ramp, a temperature setting or a sequence of a ramp-up and/or ramp-down of the temperature setting, duration of the temperature setting or temperature ramp setting, a setting of a welding depth or welding stroke, a sequence of a ramp-up and/or ramp-down of the welding depth or welding stroke, duration of the setting or ramping of the welding depth or welding stroke, other parameters required to define a reliable welding process, or a combination thereof. Where the welding process is an ultrasonic welding process, the set of conditions may further include an amplitude setting, a frequency setting, a vibration setting, sequence(s) of a ramp-up and/or ramp-down thereof, duration thereof, or a combination thereof.

Where the first zone 108a is created by or during a welding process, the welding zone 108a may be created at least at two sides of the membrane, e.g., at two opposing sides of the membrane. The fixation area comprising the welding zone 108a may be created at two, three or all sides of the membrane. The remaining sides of the membrane may be secured to the frame members by adhesion and/or mechanical compression of the second zone 108b. Thus, the step of securing in the first zone 108a may comprise a combination of adhering and integrally bonding the separator membrane between the first and second frame member. Referring to Fig. 1b, the fixation area 108 comprising the first zone 108a may be created by welding at two opposing sides of the membrane 104, while the remaining sides of the first zone 108a may be created by adhesion. In such embodiments, the width w1 of the fixation area 108 of the two sides may be the same, and may be the same or different from the width w2 of the fixation area 108 of the other two sides. Alternatively, the welding zone 108a may be present only at two opposing sides w1 of the membrane 104, while the remaining sides do not comprise first zone 108a but only second zone 108b. This embodiment may be useful when a frame member, either 102 or 106, is a film or foil. The film or foil may be provided as a roll of film or foil, or may even be provided as a roll comprising the membrane 104 and the film or foil. The welding process may be performed after unrolling the roll onto a structural frame member. Advantageously, the processing speed of such method may be increased and the number of steps in the welding process may be reduced.

Due to the membrane 104 having a certain thickness, there may be a space between the first frame member 102 and the second frame member 106 where the membrane 104 is not present. The space may be filled with the means of adhesion disclosed above or can be compensated during the welding process. Creating the first zone may comprise filling any spaces between the first frame member 102 and the second frame member 106 in the first zone 108a with means of adhesion, such as a sealing material or a solid gasket. Creating the first zone may comprise contacting a welding tool on the first zone 108a under conditions including a welding depth suitable to materially bond the first frame member 102 and the second frame member 106, thereby filling any spaces therebetween.

Fig. 2a shows another alternative embodiment of the second zone 108b. The projection on the frame member, such as projection 110' on a third frame member 110, may mechanically compress the membrane 104 indirectly against an opposite frame member, such as frame member 102, as shown in Fig. 2a. The projection 110' on the third frame member 110 may mechanically compress the membrane 104 through one or more intervening layers, such as frame member 106 adjacent to the third frame member 110. The embodiment of Fig. 2a may be useful when the intervening layer(s), e.g., frame member 106 here, is a film, a sealing part, thinner than a structural frame part, or otherwise mechanically compressible, or even deformable. There may be more than one intervening layer, such as a film 106 as well as a sealing part e.g. a gasket. The intervening layer(s) may be compressed or even deformed by projection 110' as shown in Fig. 2b. The membrane 104 is also mechanically compressed by projection 110' against opposing frame member 102, or may even be mechanically deformed, depending on the material of the membrane. The intervening layer(s) may be useful to protect the membrane or reduce the mechanical load from any undesirable effects of continued compression or deformation by projection 110' in case the membrane is made of a sensitive material. In Fig. 2a, it is shown that the first zone 108a is created by a welding process, specifically an ultrasonic welding process, using welding tool 200, which is a sonotrode. The welding tool 200 may have dimensions corresponding to or complementary to the first zone 108a.

The frame member may have projection(s) of a shape configured to mechanically compress the membrane 104 and/or associated frame members in the second zone 108b. The membrane 104 and/or associated frame members may be mechanically compressed, or even deformed, at one or a plurality of points according to the shape of the projection(s). The shape may be selected such that breakage or perforation of the membrane 104 does not happen in the second zone 108b. The shape may not be particularly limited. The shape of the projections may be adapted according to the property(ies) of the membrane. Properties of the membrane to be considered may include elongation performance, creep tendency and stiffness. In an embodiment, the shape of the projections may be adapted according to the elongation performance of the membrane 104 used or according to the reaction of the membrane in its environment.

For membranes with relatively high elongation performance, e.g. an elongation percentage of 10%, 25%, 50%, 75%, 100%, 110%, 120% or more, the contact surface of the projection may comprise distinct edges, as shown in Figs. 3a and 3b. Distinct or sharp edges may tear or perforate or otherwise weaken a membrane if it does not have sufficient elongation performance thereby causing undesirable leakages in the operating environment. For example, for polymeric membranes based on PTFE which is a material that has relatively higher hardness, the contact surface of the projection may comprise pyramids (such as in Fig. 3a) or bars (such as in Fig. 3b).

For membranes with lower elongation performance, the contact surface of the projection may comprise rounded or smooth surfaces, as shown in Fig. 3c. The contact surface of the projection may not comprise distinct or sharp edges. Other types of rounded or smooth surfaces include rounded cones, curved edges, chamfers having an appropriate radius, or other harmonized geometries, such as an edge of a frame member having the projection in which the projection may be joined to the edge by a corresponding fillet. With respect to Fig. 2a, the curves or radiuses may correspond to the thickness of the intervening layer, here frame member 106, so as to be able to mechanically compress membrane 104 through the intervening layer. A relatively low elongation performance is, for example, an elongation percentage of less than 10%, 8%, less than 8%, 5%, or less than 5%.

Similarly, where the step of securing comprises a welding process, the contact surface of the welding tool, such as a sonotrode, may comprise appropriate contact surfaces, depending on the elongation performance of the membrane. The welding process may also comprise appropriate welding conditions, depending on the elongation performance of the membrane. For example, the welding conditions for membranes with lower elongation performance may be less extreme than the welding conditions for membranes with relatively high elongation performance. Nevertheless, the second zone and/or third zone may advantageously prevent, or at least minimize, undesirable leakages even if the membrane is perforated during welding.

An illustration of a mechanically deformed membrane and associated frame members 106 and 102, upon application of a mechanical force, due to the projection 110' of frame member 110 is shown in Fig. 2b. It can be seen that the projection 110' of frame member 110 mechanically compresses, and in the specific embodiment of Fig. 2b, additionally deforms frame member 106 and membrane 104 according to the shape of the projection. Depending on the height of the projection, the projection may also create a mechanical deformation of frame member 102 according to its shape. It is shown in Fig. 2b that the projection of frame member 110 creates a dent in frame member 102, as opposed to a similar shape of the projection, as the height of the projection 110' does not extend pass the thickness t of frame member 102. The frame member 106, membrane 104 and frame member 102 possess suitable yielding performances during the step of mechanical compression to be compressed, even deformed, yet not break.

In embodiments not shown in the figures, the disclosed method may comprise creating a second zone in which mechanical compression of the membrane by a sealing part, instead of a projection of a frame member, occurs. The sealing part may mechanically compress the membrane directly or indirectly against the opposite frame member, as described herein. The sealing part may be one as disclosed herein, such as a sealing material, e.g., a solid gasket. To accommodate the sealing part, the second edge 102" of one of the frame members 102, 106 may be shorter than the other. The sealing part may be arranged proximate the second edge in the second zone. The sealing part in the second zone may be arranged between the second edge 102" of the shorter frame member and center of the membrane 104b. Where a third frame member is present and is stacked adjacent to frame member 102 or 106, such as in Fig. 2a, the third frame member may comprise a corresponding groove to accommodate the sealing part. For example, to accommodate the sealing part in an embodiment depicted in Fig. 2a, the third frame member may comprise a corresponding groove. A gasket may be retained in place by the groove. The gasket may be retained in place by glues or may be overmolded to a frame member. The sealing part may mechanically compress the membrane on one surface of the membrane or on both surfaces of the membrane. Each sealing part may be retained in place by a groove of an associated frame member or glues or may be overmolded to the associated frame member.

The fixation area 108 of the embodiments in Figs. 1 and 2 comprises first zone 108a and second zone 108b. In some embodiments, where the first zone 108a is created by or during a welding process, the zone 108a may be separated from the mechanical compression second zone 108b. The separation may be by a fixation method as disclosed herein. The zone 108a created by or during a welding process may be separated from the mechanical compression zone 108b by a third zone. Therefore, the fixation area may comprise a third zone. Advantageously, the third zone provides yet another point of fixation, thereby increasing the maximum pressure that the eventual system can withstand before undesirable leakages occur.

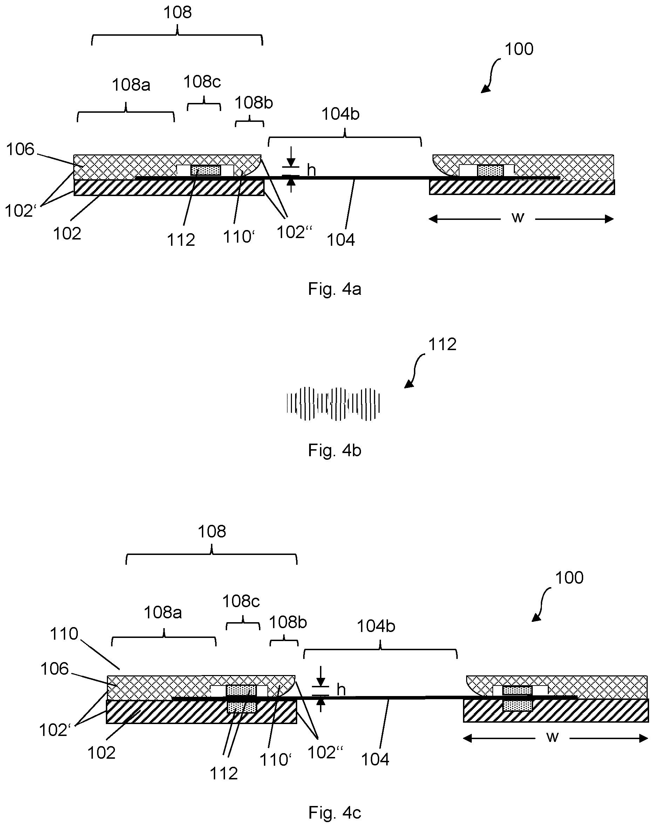

Fig. 4a shows an illustration of fixation area 108 comprising first zone 108a, second zone 108b and third zone 108c. As the zone 108a created by or during a welding process is separated from second zone 108b by the third zone 108c, the second frame member 106 may have a groove to accommodate the third zone 108c. The end of the first zone 108a is marked by the start of the groove. In embodiments where a third frame member 110 is present, such as in the embodiment of Fig. 2a, the second edge 102" of one of the frame members 102, 106 may be shorter than the other in order to accommodate third zone 108c.

The fixation method of the third zone 108c may comprise integral bonding, mechanical deformation or mechanical compression. In embodiments, the third zone 108c may comprise mechanical compression. The disclosed method may further comprise creating the third zone 108c by mechanically compressing the membrane 104 with a sealing part 112. The sealing part 112 mechanically compresses the membrane 104 against an opposite frame member, i.e. frame member 102 in Fig. 4a. The sealing part 112 may mechanically compress the membrane 104 directly against the opposite frame member or indirectly against the opposite frame member through an intervening layer, as described herein. The sealing part 112 may be one as disclosed herein, such as a sealing material. For example, the membrane 104 may be mechanically compressed in the third zone 108c by a solid gasket. The mechanical compression in the third zone 108c may be present at all sides of the membrane. For example, the solid gasket may be a hollow ring or quadrilateral that circumferentially surrounds the membrane at the third zone 108c. The solid gasket may be one conventionally used in the art, such as a rubber gasket. The solid gasket may or may not comprise profiles to increase or enhance the sealing or compression in the third zone 108c. For example, a gasket comprising a profile having bumps on the outer surface is illustrated in Fig. 4b.

In order for the third zone 108c to separate the welded zone 108a and the mechanical compression zone 108b, the sealing part 112 may be located between first zone 108a and the projection 110' in the second zone 108b. The sealing part 112 in the third zone 104f may have a certain height h. The height h of the sealing part 112 may or may not correspond with the height h of the projection 110'. Where the projection 110' is comprised on the second frame member 106, as in Fig. 4a, the sealing part 112 may be located in a groove of the second frame member 106, the groove being between the first zone 108a and the projection 110'. In embodiments where a third frame member 110 is present, such as in the embodiment of Fig. 2a, and where the height h of the sealing part 112 is more than the adjacent frame member, i.e. frame member 106 in Fig. 2a, the sealing part 112 may be accommodated in a corresponding groove (not shown) on the third frame member 110.

The sealing part 112 may mechanically compress the membrane 104 against an opposite frame member on one surface of the membrane 104, as shown in Fig. 4a. The sealing part 112 may mechanically compress the membrane 104 on each surface of the membrane 104. As shown in Fig. 4c, a sealing part 112 mechanically compresses a top surface of the membrane 104 and another sealing part 112 mechanically compresses a bottom surface of the membrane 104. Each sealing part 112 may be accommodated in a groove of an associated frame member where required, such as frame member 102 in Fig. 4c, in order to keep the layers of frame members at or as close to zero gap as possible.

The disclosed method is useful for the assembly of ion-exchange membranes in electrochemical process systems such as in an electrolyzer for hydrogen generation or in an electrodialysis cell for water deionization. The system that the fixed membrane is eventually assembled into may be a cell stack, such as a battery cell stack, an electrolyzer cell stack or an electrodialysis cell stack. The following refers to a battery cell stack, although an electrolyzer cell stack or an electrodialysis cell stack may be similarly constructed.

The disclosed method is useful for the assembly of a battery cell stack. A battery cell refers to the smallest unit of a battery for storing and/or converting energy, which comprises a positive electrode, a negative electrode, an electrolyte and a separator membrane. The separator membrane electrically separates the positive electrode and its electrolyte from the negative electrode and its electrolyte, meanwhile ensuring ionic transport between them. The battery cell may be a cell of a flow battery or a redox flow battery. In flow batteries, the separator membrane is a non-porous membrane, which lets pass only ions or electrons. Where the separator membrane lets pass only ions, the separator membrane is an ion-exchange membrane. A single cell may provide about 1 volt of energy. Depending on the requirements, a single cell or more than one cell may be stacked, along with other layers, to form an operational battery cell stack. Since an operational battery requires a stack of layers, the disclosed method of fixing the layers together is advantageous.

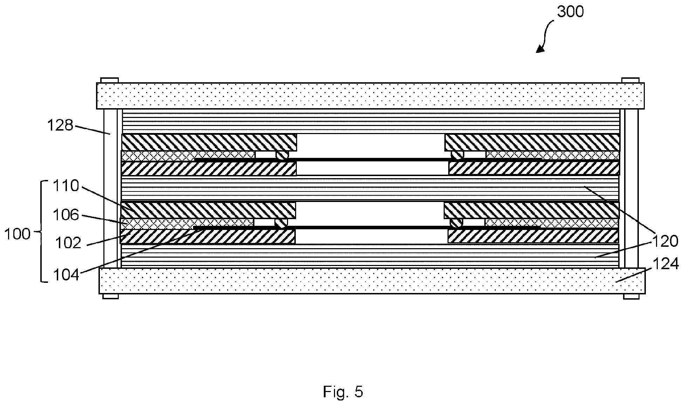

Fig. 5 shows an illustration of a section view of a battery cell stack 300 according to an embodiment of the present disclosure. For clarity, only one example of each layer is referenced by numerals in Fig. 5. The battery cell stack comprises at least one membrane sandwich provided between a pair of electrode assemblies. Fig. 5 shows two membrane sandwiches 100. Each membrane sandwich 100 is provided between a pair of electrode assemblies 120. One of the electrode assemblies 120 is shared by both membrane sandwiches 100. An electrode assembly adjacent two cells may be shared by both cells.

Each electrode assembly 120 may comprise a positive electrode or a negative electrode or a bipolar plate. For flow batteries, during discharge or operation, the positive electrode is a cathode and the negative electrode is an anode, while during charge, the positive electrode is an anode, and the negative electrode is a cathode. An electrode assembly 120 may further comprise a current collector. For example, an anode may include an anode current collector and an anode active material, while a cathode may include a cathode current collector and a cathode active material. The anode current collector may comprise a metal such as copper or the like. The cathode current collector may comprise a conductive metal, such as aluminum or the like. The anode active material, cathode active material and current collector may comprise any number of different conventional and/or proprietary materials. The current collector can be brought into close contact with the active material to increase battery output. The current collector may secure the active material in its place in the stack, thereby extending the life of the battery.

Here, the membrane 104 is welded to the first frame member 102 in the first zone. A third frame member 110 comprises a projection 110' which provides mechanical compression on the membrane 104 in the second zone. Due to the height h of the projection 110', the space between the third frame member 110 and the first frame member 102 is filled with frame member 106 being a sealing material, such as a thermoplastic polymer or a thermosetting polymer like epoxy resins or other types of glues or solid gaskets. Thus, the membrane 104 may be secured in the first zone 108a by a combination of adhering and welding, and the membrane 104 may be mechanically compressed in the second zone 108b by projection 110' on a third frame member 110. The frame of the battery cell stack therefore retains the electrolyte within the framed space, between the pair of electrode assemblies 120 and around the active area 104b of the membrane 104, without leaks or with minimal leaks, in a flow-tight manner. The battery cell stack 300 may further comprise sealing material (not shown) between an electrode assembly 120 and the membrane sandwich 100, e.g., between an electrode assembly 120 and frame member 102 and/or between an electrode assembly 120 and frame member 110. The battery cell stack 300 may also comprise any space, for example in the chamber above the membrane and/or the chamber below the membrane, occupied with sealing part(s) as disclosed herein, such as filler material, to prevent or minimize mechanical forces on the membrane.

The battery cell stack 300 further comprises an electrically-isolated end plate 124 in an adjacent layer to each outermost electrode assembly. The battery cell(s) are provided between a pair of electrically-isolated end plates 124. Adjacent to an electrode assembly layer, electrical isolation is required in order to prevent short-circuits. Short-circuits may occur when electrode assemblies contact each other. Electrical isolation may be provided by a frame member. Thus, one of the first or second frame members may be an electrode assembly. However, both the first and second frame members cannot be electrode assemblies. Electrically-isolated end plate 124 may be a frame member. Electrically-isolated end plate 124 may be a housing or part of a housing, i.e., a housing member, of the battery cell stack. Electrical isolation may be provided by end plate 124 or a separate isolation plate (not shown). End plate 124 may provide a means for fastening the layers of the battery cell stack together. End plate 124 may comprise through-holes for fasteners 128, such as bolts, screws, clamps, etc, to hold the layers of the battery cell stack together. Alternatively, the layers of the battery cell stack may be fastened together by sealing, for example by glue.

Where electrically-isolated end plate 124 is a housing or a housing member of the battery cell stack, the battery cell(s) may be inserted into the housing 124 or a housing comprising housing member 124. The housing or housing member 124 may provide the means for fastening the layers of the battery cell stack together.

## Claims

1. A method of fixing a separator membrane to a first frame member of a cell stack, the method comprising:
creating a fixation area comprising a first zone and a second zone,
wherein creating the first zone comprises securing the separator membrane to the first frame member, and
wherein creating the second zone comprises mechanically compressing the separator membrane with a projection of a frame member or with a sealing part.

2. The method of claim 1, wherein, where the separator membrane is mechanically compressed by a projection of a frame member, the step of mechanical compression comprises mechanically compressing the separator membrane between the first frame member and a second frame member, the projection being provided on the second frame member, or the step of mechanical compression comprises mechanically compressing the separator membrane between a third frame member and the first or second frame member opposite the third frame member, the projection being provided on the third frame member or the opposing first or second frame member.

3. The method of any preceding claim, wherein the step of securing comprises adhering or integrally bonding or a combination of adhering and integrally bonding the separator membrane to the first frame member.

4. The method of any preceding claim, wherein the first zone is proximate to a first edge of the frame members, the first edge denoting an outer perimeter of the frame members.

5. The method of any preceding claim, wherein the second zone is proximate to a second edge of the frame members opposite the first edge, the second edge denoting an inner perimeter of the frame members.

6. The method of any one of claims 3-5, wherein, where the step of securing comprises adhering or a combination of adhering and integrally bonding, the adhering step comprises applying a sealing material, an adhesive, a thermoplastic polymer or a thermosetting polymer to adhere the separator membrane to the first frame member.

7. The method of any one of claims 3-5, wherein, where the step of securing comprises integrally bonding or a combination of adhering and integrally bonding, the step of integrally bonding comprises an ultrasonic welding process.

8. The method of any preceding claim, wherein the fixation area comprises a third zone and the method further comprises creating the third zone between the first zone and the second zone by mechanically compressing the separator membrane with a sealing part.

9. The method of claim 8, wherein the first zone is created by integrally bonding the separator member to the first frame member and the second zone is created by mechanically compressing the separator membrane with a projection of a frame member.

10. The method of any preceding claim, wherein the separator membrane is an ion-exchange membrane.

11. A cell stack comprising:
at least one of:
a separator membrane fixed to a first frame member, wherein the fixation area comprises a first zone and a second zone, the first zone comprising the separator membrane secured to the first frame member, and the second zone comprising the separator membrane mechanically compressed by a projection of a frame member or by a sealing part; and
a pair of electrode assemblies, wherein the separator membrane fixed to the first frame member is provided between the pair of electrode assemblies;
and
an electrically-isolated end plate in an adjacent layer to each outermost electrode assembly,
wherein the layers of the cell stack are fastened together.

12. The cell stack of claim 11, wherein the separator membrane is fixed to the first frame member according to the method of any one of claims 1-10.

13. The cell stack of claim 11 or 12, wherein the separator membrane is an ion-exchange membrane and the cell stack is configured for use in a redox flow battery, an electrolyzer or an electrodialysis cell.

14. Use of an ion-exchange membrane in the cell stack of any one of claims 11-13.
